(19) Europäisches Patentamt
European Patent Office
Office européen des brevets

(11) Publication number: **0 225 321 B1**

(12) **EUROPEAN PATENT SPECIFICATION published in accordance with Art. 158(3) EPC**

(45) Date of publication of patent specification: **03.04.91** (51) Int. Cl.⁵: **C08J 9/14**

(21) Application number: **85903140.3**

(22) Date of filing: **10.06.85**

(86) International application number: **PCT/US85/01089**

(87) International publication number: **WO 86/07370 (18.12.86 86/27)**

# (54) PROCESS FOR THE PREPARATION OF LOW K-FACTOR CLOSED CELL PHENOL-ALDEHYDE FOAM.

(43) Date of publication of application: **16.06.87 Bulletin 87/25**

(45) Publication of the grant of the patent: **03.04.91 Bulletin 91/14**

(84) Designated Contracting States: **AT BE CH DE FR GB IT LI NL SE**

(56) References cited:
FR-A- 2 081 919
GB-A- 2 085 886
US-A- 2 629 698
US-A- 2 933 461
US-A- 3 081 269
US-A- 3 298 973
US-A- 4 176 106
US-A- 4 202 945
US-A- 4 204 020
US-A- 4 205 135
US-A- 4 219 623
US-A- 4 247 413

(73) Proprietor: **THE DOW CHEMICAL COMPANY**
**2030 Dow Center Abbott Road P.O. Box 1967**
**Midland Michigan 48640-1967(US)**

(72) Inventor: **RICKLE, Gregory, Kent**
**3653 Jane Drive**
**Midland, MI 48640(US)**

(74) Representative: **Burford, Anthony Frederick et al**
**W.H. Beck, Greener & Co. 7 Stone Buildings**
**Lincoln's Inn**
**London WC2A 3SZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to phenolic foams prepared from resole resins. More particularly, the present invention relates to generally closed cell phenolic foams which are prepared from resole resins and which have a K-factor of less than 0.032 watt/(m•K)
(0.22 Btu/hr-°F-ft$^2$).

Phenol-aldehyde foams have been prepared for many years by a method which involves the addition of an acid catalyst to a liquid phenol-aldehyde resole resin. Polymerization of the resole resin commences very quickly following the addition of the acid catalyst Since the reaction is highly exothermic, the heat liberated by the reaction rapidly increases the temperature of the reaction mixture. The continuing increase in reaction temperature progressively increases the rate of polymerization. Accordingly, the reaction proceeds to completion very quickly. In fact, once initiated, the reaction is generally considered to be nearly impossible to control. The temperature of the reaction mixture increases suf ficiently to cause the formation of enough steam from the water originally present in the resole resin and the water formed during reaction to foam the resin. The accompanying high reaction temperature causes the initially liquid resole resin to cure to a solid infusible state before the foam collapses. The phenol-aldehyde foam thus prepared usually has an open cell structure. The open cell structure does not provide for optimum properties with regard to thermal conductivity and resistance to moisture absorption. In addition, it has been found that open cell phenol-aldehyde foam has a tendency to punk, that is, to continue to glow red hot and to smolder after high heat is applied and then removed. However, in general the open cell foam has excellent fire resistance and generates only a small amount of smoke when subjected to high temperatures.

In addition to the foregoing difficulties, it has been found that most known cellular materials produced from phenolic polymers exhibit an unsatisfactory thermal conductivity initially. Other known cellular materials produced from phenolic polymers exhibit an undesirable increase in thermal conductivity with time.

Accordingly, it is an object of the present invention to provide a process for preparing a closed cell phenol-aldehyde foam material substantially free of the disadvantages of prior foams.

Another object is to provide a process for preparing closed cell phenol-aldehyde resin foam material which exhibits a high closed cell content without adversely affecting friability, compressive strength and the low flammability characteristics of the material.

The present invention is an improved process for preparing a generally closed cell, low K-factor foam material, the foam material resulting from a process wherein a phenol-aldehyde resole resin, a blowing agent and, optionally, a surfactant are admixed with an acid catalyst to form an admixture which is then poured into a forming means and cured, wherein

(a) the resole resin is stripped to a water content of less than 7 weight percent, based on resin weight, after addition of a viscosity-modifying aromatic organic solvent in an amount sufficient to maintain a viscosity of less than 100 Pa.s; and

(b) from 10 to 20 weight percent, based on resin weight, of an unbranched dihydroxy ether polyglycol having a molecular weight greater than 300 is added to the stripped resole resin.

Any thermosetting phenol-aldehyde resin in a water-insoluble liquid state may be employed in compositions of the present invention. In general, such resins are prepared by condensation of one molecular equivalent of a monohydric phenol which is unsubstituted in at least one of the two-, four-and six-positions of the benzene nucleus, with between 1 and 2.5, preferably between 1.4 and 1.5, molecular equivalents of an aldehyde and discontinuing the condensation reaction when the product becomes water-insoluble, but remains liquid. Procedures for making such liquid phenol-aldehyde condensation products are well known in the art and need not be given in detail. However, the condensation reaction is generally started under alkaline conditions, e.g., using from 1 to 2 percent by weight of sodium hydroxide, potassium hydroxide, sodium carbonate, or other basic catalysts, and carried out at temperatures of from about 40 to about 70° Centigrade (°C). The condensation reaction is carried out to a point at which the product is a fairly thin, water-soluble liquid. The liquid is then acidified by adding a strong aqueous mineral acid such as hydrochloric or sulfuric acid. The reaction is then continued at temperatures of from about 40 to about 70°C until the mixture becomes fairly viscous and is water-insoluble. The reaction is then preferably stopped short of the solidification point. It is essential that the phenol-aldehyde condensation reaction be carried to a point at which the product thereof is substantially water-insoluble, although said product itself may have from 20 to 35 percent of water dissolved in it. After carrying the phenol-aldehyde condensation reaction out in the presence of an acid to a point at which the product is a water-insoluble liquid, the mixture is neutralized, e.g., with aqueous ammonia, sodium hydroxide, potassium hydroxide, sodium carbonate, or potassium carbonate, and washed thoroughly with water. The condensation product usually retains 20 to 35 percent by weight of dissolved water. In most instances, such condensation product of

phenol and aldehyde has a viscosity of about 0.3 to 0.4 pascal seconds ("Pa•s" or in English units, about 300 to 400 centipoise) at 25° C, but it may be lower or higher in viscosity.

Upon standing, an aqueous layer separates from the resin and is decanted off. The resin layer is then washed with an equal volume of water. After wash water is decanted, the resin is vacuum stripped of additional water until the desired water content and/or viscosity is reached. A viscosity adjusting amount of a solvent is added before vacuum stripping.

Typical of the phenols that are useful in producing suitable resole resins suitable for the purposes of the present invention are those represented by the formula:

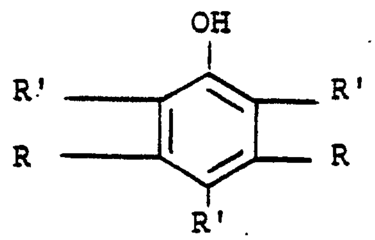

I

wherein at least two groups represented by R' are hydrogen atoms and the groups represented by R and any remaining group represented by R' are hydrogen atoms or groups which do not impede the condensation of the phenol with an aldehyde. Examples of suitable groups are a substituent such as halogen atom or a hydroxy, alkyl or aryl group. Illustrative of suitable phenols are phenol, cresols (particularly M-cresol), xylenols (particularly 3,5-xylenol), and dihydroxybenzenes (particularly resorcinol).

Typical of the aldehydes that can be used in producing suitable resole resins for purposes of the present invention are formaldehyde (including the oligomers and polymers of formaldehyde such as trioxane), furfural, sugars and cellulose hydrolyzates. Such aldehydes can be employed without dilution or dissolved in suitable solvents including aqueous alcohols (e.g., aqueous methanol, N-propanol, isobutanol or N-butanol).

The solvent employed to adjust the viscosity of the resole resin is suitably selected from the group consisting of phenol, aniline, resorcinol, cresol and aminophenol. Desirably the solvent is selected from the group consisting of phenol and aniline. The solvent is suitably present in an amount sufficient to adjust the viscosity of the resole resin in such a manner, that after vacuum stripping, the viscosity of the resole resin will be less than 3.5 Pa•s (3,500 centipoise).

The resole resin is stripped via vacuum stripping to a water level, or content, of less than 7 percent by weight based on weight of the resin. Desirably, the resole resin is stripped to a water content of from 3 to 6 percent by weight based on weight of resin.

The amount of solvent which is added to the resole resin to adjust the viscosity is suitably from 8 to 20 weight percent based on weight of the resin. It is believed that at least a portion of the solvent is capable of reacting with the resole resin during crosslinking reactions which take place during foaming.

The polyglycols which are believed to function as heat sinks for purposes of the present invention are selected from the group consisting of unbranched dihydroxy ether polyglycols having a molecular weight greater than 300. The polyglycol is preferably polyethylene glycol or polypropylene glycol.

The acids employed as catalysts are the strong inorganic acids such as sulphuric acid hydrochloric acid, phosphoric acid, nitric acid; i.e., the strong mineral acids or aqueous solutions of such acids, e.g., a concentrated aqueous solution of hydrochloric acid, or strong organic acids such as benzene sulfonic acid, a toluene sulfonic acid, phenol sulfonic acid, xylen sulfonic acid, beta-naphthalene sulfonic acid and alpha-naphthalene sulfonic acid. Mixtures of any two or more of the acids can also be used. Desirabley, the acid employed as a catalyst is benzene sulfonic acid monohydrate.

Oftentimes in order to stabilize pregelled foam, a surfactant or surface active agent is employed. Beneficially the surfactant is a nonionic surfactant such as the reaction or condensation product of an alkylene oxide having from two to four carbon atoms in the molecule with a compound such as higher alkyl phenols having from 8 to 12 carbon atoms in the alkyl group, fatty acids having from 12 to 20 carbon atoms and alkyl siloxanes. Among suitable surfactants are (a) the polyoxyethylene ethers of alkyl phenols having the general formula:

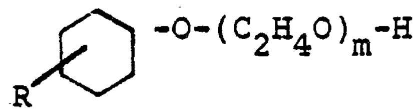

II

wherein R is an alkyl group having from 8 to 12 carbon atoms and m is an integer of from about 8 to 20; (b) ethoxylated castor oil and ethoxylated hydrogenated castor oil; i.e., the condensation product of said castor oils and from 8 to 24 mols of ethylene oxide per mol of said castor oil; (c) copolymers of ethylene oxide and/or propylene oxide containing from 8 to 20 moieties of each of said alkylene oxides, and alkyl siloxane polyoxyalkylene block copolymers similar to those described in U.S. Patent No. 2,834,748. In addition, fluorinated surfactants having an alkyl fluorocarbon hydrophobic portion are also suitable.

Beneficially, the surfactant is an alkyl siloxane alkylene oxide block copolymer of the formula:

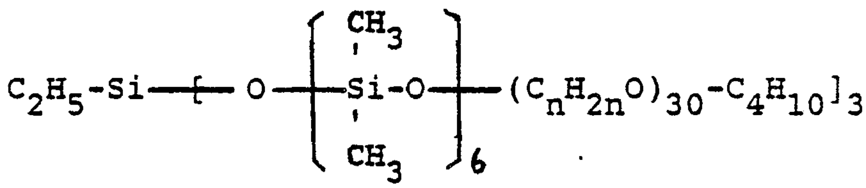

III

wherein $C_nH_{2n}O$ is a mixed oxyethylene/oxypropylene block of about 17 oxyethylene units and about 13 oxypropylene units; or an alkyl siloxane alkylene oxide copolymer of the formula:

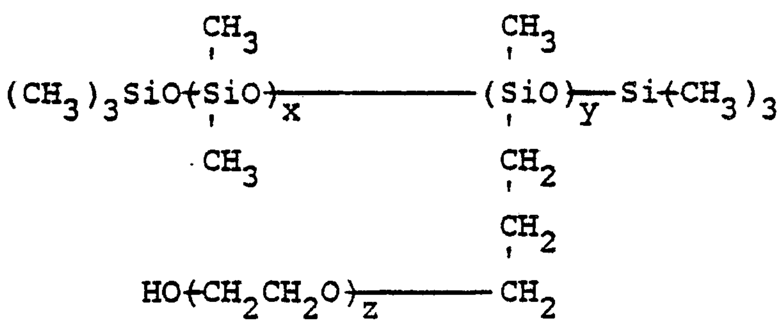

IV

wherein x is an integer equal to 15 or 16, y is an integer equal to 2 or 3 and z is an integer equal to 10 or 11; or an ethoxylated castor oil, i.e., the condensation product of castor oil and about 23 mols of ethylene oxide per mol of said castor oil.

Any blowing agent characteristically employed in similar prior art products can be employed in the process and the product of the process of the present invention. In general, these blowing agents are liquids having an atmospheric pressure boiling point between -50° and 100° C and preferably between 0 and 50° C. The preferred liquids are hydrocarbons or halohydrocarbons. Examples of suitable blowing agents include, among others, chlorinated and fluorinated hydrocarbons such as trichlorofluoroethane, trichlorofluoromethane, $CCl_2FClCF_2$, $CCl_2FCF_3$, diethyl ether, isopropyl ether, N-pentane, cyclopentane, and 2-methylbutane. The blowing agent is desirably trichlorotrifluoroethane.

It is known in the art that K-factor changes as a function of time and that diffusion of fluorocarbon gases out of unfaced foam and fusion of air into the foam causes an increase in K-factor.

A slow K-drift foam is defined as one that attains a K-factor at 24° C of 0.022 to 0.024 watt/(m•K) after 200 to 400 days and then remains below a K-factor of 0.029 for 5 to 10 years. Eventually all fluorocarbon diffuses from the foam to leave a closed cell material which contains only air in the cells.

The K-factor for the closed cell foam containing only air falls in the range of 0.032 to 0.037 watts per meter kelvin (watt/m•K) (or watts per meter °C) at 24° C for foam in 32 to 48 kilogram per cubic meter ($kg/m^3$) density range. This is equivalent to 0.22 to 0.26 British Thermal Units per hour - ° Fahrenheit - square foot (hereinafter Btu/hr - °f -$ft^2$) per inch thickness at 24° C for the 2 to 3 pounds per cubic foot density range. Therefore, if a foam exhibits a K-factor of greater than about 0.032 watt/(m•K) at 24° C for the 32 to 48 $kg/m^3$ density range after a short period of time ( less than 25 days), then substantially all fluorocarbon has diffused from the foam and has been replaced by air. On the other hand, if the K-factor

remains below 0.032 watt/(m•K) at 24°C for the 32 to 48 kg/m$^3$ density range for at least 100 days, then a substantial amount of fluorocarbon gas remains in the closed cells of the foam in spite of infusion of air.

The closed cell foams produced in accordance with the present invention beneficially have a K-factor of less than 0.029 watt/(m•K) at 24°C for the 32 to 48 kg/m$^3$ density range. Desirably the K-factor for foams produced in accordance with the present invention is from 0.017 to 0.024 watt/(m•K) at 24°C for the 32 to 48 kg/m$^3$ density range.

It is known that typical resole resins contain from about 10 to about 15 percent water based on resin weight prior to foaming. It is also known that additional water is produced in the crosslinking reaction. That water which is not converted to steam by heat of the reaction is believed to separate as a microdroplet phase upon acidification and curing. It has been found that holes form throughout the structure when the microdroplets evaporate. In addition, it is believed that the steam that is generated by heat of the reaction tends to cause large cells to be blown. The combination of large cell size and hole formation is believed to lead to a porous foam structure formed largely of open and interconnecting cells which allow easy diffusion from the structure of blowing agent. Accordingly, the present invention is centered upon making a closed cell resin.

When phenolic resole resins in general and resins of the present invention in particular are stripped of water to a water content of less than 10 weight percent based on resin weight, viscosity of the resin increases dramatically. As water content of the resin is further reduced to levels of less than 7 weight percent based on resin weight, viscosity increases become even more pronounced. Typical resins prior to stripping have a viscosity on the order of about 0.2 Pa•s to about 0.4 Pa•s. At ambient conditions a resin which has been stripped to a water content of less than 7 weight percent based on resin weight has a viscosity on the order of 100 Pa•s or greater. A resin having a viscosity on the order of about 100 Pa•s presents a number of handling dif ficulties. In order to achieve a resin having both a low viscosity (on the order of 3 Pa•s) and a low water content (3 to 7 weight percent based on resin weight), a viscosity adjusting amount of a solvent is added to the resin prior to stripping.

In addition to increasing resin viscosity, stripping of water has been found to cause another significant problem. The problem centers around increasing temperatures in the foam during crosslinking. It is believed that the water acts as a heat sink during foaming to prevent explosive foaming such as is commonly seen in foaming of generally dry resole resins. In accordance with the present invention, a polyglycol is added. It is believed that the polyglycol acts as a heat sink in that it acts to prevent excessive heat build-up during the crosslinking reaction.

A typical phenolic resole-type resin contains from about 10 to about 15 weight percent water based on resin weight. In accordance with the present invention, a viscosity adjusting amount of a solvent is added to the resin prior to a vacuum stripping procedure to reduce the water content to a level of from 3 to 7 weight percent based on resin weight. The solvents suitable for purposes of the present invention have hereinbefore been set forth. The viscosity adjusting amount of solvent is desirably from 10 to 20 weight percent based on weight of resin when the solvent is added to the resin prior to stripping. The typical phenolic resoletype resin also contains from about 3 to about 10 weight percent free phenol (where free phenol is reacted to form the resole resin). Accordingly, when free phenol is also used as a solvent, the total amount of free phenol present is from about 13 to about 30 weight percent based on weight of resin. Persons skilled in the art will recognize that in stripping water from the resin, an amount of solvent will also be stripped from the resin solvent mixture. Such persons will also recognize that it is generally true that when larger amounts of water must be stripped, it follows that larger amounts of solvent will also be removed. After stripping has been completed, phenolic resins of the present invention beneficially have a total amount of a phenol, such as free phenol, plus a solvent, as hereinbefore set forth, in the range of from about 10 to about 20 weight percent based on resin weight.

After the solvent addition and stripping steps have been completed, the polyglycol, the surfactant, and the blowing agent are placed in admixture with the stripped phenolic resins to form a reaction mixture. Foaming commences following addition of the acidic catalyst to the reaction mixture. The times, temperatures and other reaction conditions are well known in the art and usable in the practice of this invention. Merely for the purpose of illustration and not for limitation, reference is made to Organic Chemistry of Synthetic High Polymers by Robert W. Lenz, published in 1968 by Interscience Publishers, Inc., New York, Chapter 4, "Carbonyl Addition-Substitution Reactions," pps. 113-138 and 140-142 and to Polymer Processes, edited by Calvin E. Schildknecht, published in 1956 by Interscience Publishers, Inc., New York, Chapter 8, "Condensations With Formaldehyde", by T. J. Suen.

The average cell size diameter is suitably from about 0.1 to about 5 mm as measured in accordance with American Society for Testing Materials (hereinafter ASTM) D-2842. Fine celled foams having a cell structure wherein generally all of the cells are closed cells, can be prepared in accordance with the present

invention. The blowing agent is trapped in the cells. One means of expressing the containment in the cells of the blowing agent is by use of the K-factor drift value. Unfaced cellular material containing fluorocarbon gas have initial K-factors in the vicinity of 0.014 to 0.029 watts/(m•K) at 24°C. This low value increases over a period of months or sometimes days. The change is expressed as the K-factor drift. The K-factor is measured at a mean temperature of 24°C. The value is redetermined at various time intervals of up to 1,000 days. A material exhibiting fast K-factor drift will attain a K-factor of at least 0.029 watts/(m•K) with 25 days. A slow K-factor drift material may require between 200 days and over two years to attain a K-factor of 0.029 watts/(m•K). Any material which possesses a K-factor value under 0.029 watts/(m•K) will provide high thermal resistance. Obviously, the longer this value or a lower value is maintained, the better the efficiency of the insulation.

Foam Burn-Through Times are suitably determined by using the Burn Through Test detailed herein under Testing Methods. Phenol-aldehyde foams prepared in accordance with the present invention suitably have a Burn-Through Time of greater than 10 minutes, beneficially greater than 20 minutes and desirably greater than 30 minutes. In testing foam samples according to the Burn Through Test, it has been observed that foam samples having good Burn-Through Times (30 minutes or more) consistently have a raised and charred section where the flame touches the sample. By way of contrast, it has been observed that foam samples having poor Burn-Through Times (10 minutes or less) lacked the raised and charred section. In addition, the samples having poor Burn-Through Time appear to crack and pull away from the flame source thereby allowing flame penetration.

It has been found that by varying amounts of polyglycol and total phenol in a foamable mixture, both based on weight of the phenol-aldehyde resin, one is able to affect the Burn-Through Time of the foam produced therefrom. It is to be understood that the expression "total phenol" refers to the total amount of phenol plus solvent in the foamable mixture after stripping of the phenol-aldehyde resin. A level of polyglycol of greater than 15 percent by weight in conjunction with a total phenol level of greater than 14 percent by weight, both based on weight of the phenol-aldehyde resin, will produce foams in accordance with the present invention having satisfactory Burn-Through Times. It has been found that at a 20 weight percent level of polyglycol, a total phenol level of 13.9 weight percent will produce mixed results. That is, a foamable mixture with such levels may yield either satisfactory Burn-Through Times or unsatisfactory Burn-Through Times (less than 10 minutes).

Autoxidation tendencies of foam samples are suitably determined by using the Autoxidation Test detailed herein under Testing Methods. Phenol-aldehyde foams prepared in accordance with the present invention generally exhibit no tendency to show an exotherm above 250°C during the autoxidation test. Foams prepared generally in accordance with the present invention but containing less than 10 percent by weight, based on weight of phenol-aldehyde resin, of a polyglycol selected from those hereinabove set forth tend to autoxidize or exhibit an exotherm which rises quickly above 250°C during the autoxidation test. Foams prepared in accordance with the present invention with a polyglycol level fixed at 20 weight percent based on weight of resin but varying levels of total phenol exhibit no tendency to autoxidize during the autoxidation test. Accordingly, in order to inhibit autoxidation of phenol-aldehyde foams prepared in accordance with the present invention, it is necessary that a level of polyglycol of at least 10 percent by weight based on weight of resin must be included in a foamable reaction mixture.

The present invention is further illustrated by the following experiments in which all parts and percentages are by weight unless otherwise indicated. The experiments are illustrative only and are not to be taken by way of limitation.

For the foams prepared below, viscosities were determined using a Brookfield viscometer. Resin samples were equilibrated in a 24°C water bath prior to viscosity measurement. Water concentration was determined by the Carl Fischer method which is well known to those skilled in the art. Free phenol was determined by gas chromatography using a S & M Scientific Model 5750 gas chromatograph commercially available from Hewlett-Packard Co. K-factors were obtained using a K-Matic thermal conductivity instrument commercially available from Dynatech Corp. Foam Friability was determined in accordance with ASTM C-421. Foam cell size was determined in accordance with ASTM D-2842.

Foams were made in a mold using various formulations as hereinafter set forth. These formulations were mixed and poured into the mold and placed in an oven set at 75°C for a period of 45 to 60 minutes. The sample was then demolded and placed in a curing oven set at 75°C and left in the oven at that temperature for a period of about 10 hours.

In the Burn-Through Test a foam sample having a size of 2.5 cm by 15.2 cm by 7.6 cm (1 in. x 6 in. x 3 in.) is placed in a holder. A propane burner flame having a temperature of 1,157°C is introduced 2.5 cm (one inch) above the sample and perpendicular thereto. The time is then measured for the flame to become visible through the bottom side of the foam opposite the side to which the flame is applied. Penetration of

the flame is observed by use of a cut-out in a plate on which the foam rests. The test is terminated after 30 minutes if the sample does not burn through.

The Autoxidation Test occurs in an oven set at 250 °C. A thermocouple is placed in a foam sample having a size of 7.6 cm by 7.6 cm by 7.6 cm (3 in. x 3 in. x 3 in.). The internal temperature of the foam is recorded as a function of time. Samples which autoxidize gave an exotherm that quickly rose above 250 °C. The Autoxidation Test was terminated when the exotherm reached 400 °C to avoid generation of obnoxious fumes. Inasmuch as the foams were produced, as noted above, in an 45.7 cm by 76.2 cm by 5.1 cm (18 in. x 30 in. x 2 in.) mold, the test samples for the Autoxidation Test were prepared by gluing 7.6 cm by 7.6 cm by 2.5 cm (3 in. x 3 in. x 1 in.) samples together.

Preparation of a Phenolic Resin of the Resole Type For Use in Making Foams According to the Present Invention.

370 Grams of phenol and 440 grams of an aqueous (37%) solution of formaldehyde were added to a two liter flask fitted with a condenser and a mechanical stirrer to form a first mixture. The pH of the first mixture was adjusted to about 9.0 with about 6 milliliters (ml) of an aqueous (50%) solution of sodium hydroxide to form a second mixture. The second mixture was heated to 60 °C with stirring and maintained at that temperature for a period of four hours. The second mixture was then cooled to room temperature and the pH of the second mixture lowered to about 1.7 with about 9 ml of an aqueous (40%) solution of sulfuric acid to form a third mixture. The third mixture was then heated with stirring to 60 °C and maintained at that temperature for an additional two hours. The pH of the third mixture was then raised to 5.5 with about 4 ml of an aqueous (5%) solution of sodium hydroxide after cooling the third mixture to room temperature. Upon standing, an aqueous layer separated from a resin phase. The aqueous layer was decanted off from the resin phase. The resin phase was then washed with an equal volume of water. After the wash water was decanted, the resin phase was vacuum stripped of additional water until a water content from about 8 to about 15 percent by weight, based on weight of resin plus water, and a viscosity of about 3 Pa•s was reached.

Experiment 1 -

Low K-factor Foam Prepared in Accordance with the Invention

2.2 kilograms (5 pounds) of phenol were added to 13.5 kg (30 pounds) of a phenolic resole resin prepared as detailed hereinabove to form a mixture. The mixture was then vacuum stripped of additional water to a viscosity of 7.5 Pa•s a water content of 4.0 percent, based on mixture weight, and a free phenol content of 13.5 percent, based on mixture weight. A foamable mixture was prepared by admixing 633 grams of the stripped mixture, 14.6 grams of an alkyl siloxane surfactant commercially available under the trade designation DC-193 from The Dow Corning Corporation at Midland, MI, 126 grams of polyethylene glycol commercially available under the trade designation E-400 from The Dow Chemical Company, 90 grams of trichlorofluoromethane, a blowing agent commercially available under the trade designation Freon 11 and 47 grams of benzenesulfonic acid monohydrate (90 percent solution in water). The foamable mixture was mixed thoroughly and poured into a 45.7 cm by 76.2 cm by 5.1 cm mold and foamed as hereinabove detailed to produce a foam sample. After removal from the curing oven, the sample was tested for physical properties in accordance with the testing methods hereinbefore detailed. The sample physical properties were: (a) Friability - 82 percent; (b) Foam density - 46.4 kg/m$^3$; (c) Foam cell size - 0.32 millimeter; and (d) Foam K-factor - 0.016 watts/ (m•K).

Experiment 2 -

Low K-factor Foam Prepared in Accordance With the Invention

2.7 kg of phenol were added to 18.1 kg of the same phenolic resole resin used in Experiment 1 to form a mixture. The mixture was then stripped as in Experiment 1 to a viscosity of 3.4 Pa•s, a water content of

6.5 percent, based on mixture weight, and a free phenol content of 18.8 percent, based on mixture weight. A foamable mixture was prepared by admixing 633 grams of the stripped mixture, 14.6 grams of the same alkyl siloxane surfactant as used in Experiment 1, 126 grams of polypropylene glycol commercially available under the trade designation P-400 from The Dow Chemical Company, 120 grams of 1,1,2-trichloro-2,2,1-trifluoroethane, a blowing agent, commercially available under the trade designation Freon 113, and 47 grams of benzene sulfonic acid monohydrate (90 percent solution in water). The foamable mixture was then mixed thoroughly and poured into a 45.7 cm by 76.2 cm by 5.1 cm mold and foamed as in Experiment 1 to produce a foamed sample. The sample physical properties were: (a) Friability - 68 percent; (b) Foam density - 46.4 kg/m$^3$; (c) Foam cell size - 0.58 millimeter; and (d) Foam K-factor - 0.017 watt/(m•K).

Experiment 3 -

Low K-factor Foam Prepared in Accordance With the Invention

160 Grams of aniline were added to 800 grams of the same phenolic resole resin used in Experiment 1 to form a mixture. The mixture was then stripped as in Experiment 1 to a viscosity of 4.42 Pa•s. A foamable mixture was prepared by admixing 150 grams of the stripped mixture, 2.25 grams of the same alkyl siloxane surfactant as used in Experiment 1, 15 grams of the same polyethylene glycol as used in Experiment 1, 15 grams of the same blowing agent as used in Experiment 2 and 63 grams of benzene sulfonic acid monohydrate (90 percent solution in water). The foamable mixture was then mixed thoroughly and poured into a 22.9 cm by 22.9 cm by 5.1 cm mold and foamed as in Experiment 1 to produce a foam sample. After removal from the curing oven, the foam sample was tested for its K-factor. The K-factor of the sample was 0.025 watt/(m•K) when measured initially. After a lapse of 5 weeks, the K-factor was 0.021 watt/(m•K).

Experiment 4 -

Foam Prepared in Accordance With the Invention but With a Different Surfactant

3.6 kg of phenol were added to 24.7 kg of the same phenolic resole resin used in Experiment 1 to form a mixture. The mixture was then stripped as in Experiment 1 to a viscosity of 5.53 Pa•s a water content of 5.6 percent, based on mixture weight, and a free phenol content of 19.6 percent, based on mixture weight. A foamable mixture was prepared by admixing 225 grams of the stripped mixture, 6.8 grams of an ethoxylated castor oil commercially available under the trade designation G-1292 from Atlas Chemical, 43 grams of the same polyethylene glycol as used in Experiment 1, 43 grams of the same blowing agent as used in Experiment 2 and 15 grams of benzene sulfonic acid monohydrate (90 percent solution in water). The foamable mixture was then mixed as in Experiment 1 and poured into a 30.4 cm by 30.4 cm by 5.1 cm mold and foamed as in Experiment 1 to produce a foamed sample. The sample physical properties measured were: (a) Foam density - 48.0 kg/m$^3$ and (b) K-factor - 0.018 watt/(m•K). Friability and foam cell size were not measured.

Experiment 5 -

Foam Not According to the Invention Prepared Without Adding a Solvent and Without Adding a Polyglycol Following Stripping

The same phenolic resole resin used in Experiment 1 was vacuum stripped of water to a viscosity of 100 Pa•s and to a water content of 3.5 percent based on weight of resin plus water. With mixing, 6.75 grams of the same alkyl siloxane surfactant as used in Experiment 1, 45 grams of the same blowing agent as used in Experiment 1, and 31.5 grams of an acid catalyst mixture consisting of equal weights of 6 normal hydrochloric acid and ethylene glycol were added to 450 grams of the stripped resin to form a mixture. The

mixture was then poured into a 10.2 cm by 30.5 cm by 30.5 cm mold and foamed as in Experiment 1 to produce a foam sample. The sample had a K-factor of about 0.035 watt/(m•K).

Experiment 6 -

Flame Penetration and Autoxidation Tests of Foam Not According to the Invention Prepared From a Foamable Mixture Having a Low Phenol Content

A first mixture was formed by adding 40 grams of phenol to 800 grams of a phenolic resole resin which had previously been stripped to a viscosity of 2.01 Pa•s and a water content of about 12 percent based on resin weight. The mixture had a phenol content of 8.2 percent based on weight of the mixture. A foamable mixture was prepared by admixing 150 grams of the first mixture, 2.25 grams of the same alkyl siloxane surfactant as used in Experiment 1, 30 grams of the same polyethylene glycol as used in Experiment 1, 15 grams of the same blowing agent as used in Experiment 2, and 2 grams benzene sulfonic acid monohydrate (90 percent solution in water). The foamable mixture was then mixed as in Experiment 1, poured into a 30.5 cm by 30.5 cm by 5.1 cm mold and foamed as in Experiment 1 to produce a foam sample. The sample physical properties were: (a) Foam density - 57.6 kg/$m^3$; (b) K-factor - 0.039 watt/(m•K). The sample had a Burn-Through Time of 1.5 minutes.

Experiment 7 -

Flame Penetration Test of Foam Prepared in Accordance With the Present Invention

2.0 kg of phenol were added to 13.6 kg of the same phenolic resole resin as used in Experiment 1 to form a mixture. The mixture was then stripped as in Experiment 1 to a viscosity of 7.5 Pa•s, a water content of 6.25 percent, based on mixture weight, and a phenol content of 13.9 percent, based on mixture weight. A foamable mixture was prepared by admixing 633 grams of the stripped resin, 14.5 grams of the same alkyl siloxane surfactant as used in Experiment 1, 126 grams of the same polyethylene glycol as used in Experiment 1, 120 grams of the same blowing agent as used in Experiment 2 and 47 grams of benzenesulfonic acid monohydrate (90 percent solution in water). The foamable mixture was then prepared as a foam sample in the same manner as set forth in Experiment 1. The foam sample was then tested for physical properties as hereinbefore detailed. The sample physical properties were: (a) Friability - 71 percent; (b) Foam density - 43.2 kg/$m^3$; (c) Foam cell size - 0.41 millimeters; and (d) Foam K-factor - 0.019 watt/(m•K).

The sample had a Burn-Through Time of greater than 30 minutes. In addition, the sample passed the Autoxidation Test by exhibiting no exotherm in an oven heated to a temperature of 250° Centigrade.

Experiment 8 -

Flame Penetration and Autoxidation Tests of Foam Not According to the Invention With 5 Percent Polyglocol

2.7 kg of phenol were added 18.1 kg of the same phenolic resole resin as used in Experiment 1 to form a mixture which was then stripped, as in Experiment 1, to a viscosity of 3.45 Pa•s, a water content of 6.5 percent, based on mixture weight, and a phenol content of 18.8 percent, based on mixture weight. A foamable mixture consisting of 633 grams of the stripped resin, 14.6 grams of the same alkyl siloxane surfactant as used in Experiment 1, 31.5 grams of the same polyethylene glycol as used in Experiment 1, 120 grams of the same blowing agent as used in Experiment 2, and 47 grams of benzene sulfonic acid monohydrate (90 percent solution in water) was then mixed with stirring. The foamable mixture was then prepared as a foam sample as in Experiment 1. The foam sample was then tested for physical properties as hereinbefore detailed with the following results: (a) Foam density - 44.8 kg/$m^3$; (b) Foam cell size - 0.81 millimeter; and (c) Foam K-factor - 0.038 watt/(m•K). The sample had a Burn-Through Time of 1 minute. In

the Autoxidation Test, the sample had an exotherm of 312°C in a 250°C oven.

Experiment 9 -

Flame Penetration and Autoxidation Tests of Foam According to the Invention Prepared With 10 Percent of a Polyglycol.

A foam sample was prepared using the same components and procedures as in Experiment 8, except that the amount of polyethylene glycol was doubled. Physical properties of the foam sample so prepared were: (a) Foam density - 33.6 kg/m$^3$; (b) Foam cell size - 0.67 millimeter; and (c) Foam K-factor - 0.021 watt/(m•K). The sample had a Burn-Through Time of 21 minutes. In the Autoxidation Test, the sample exhibited no exotherm in a 250°C oven.

Experiment 10 -

Flame Penetration and Autoxidation Tests of Foam According to the Invention Prepared With 20 Percent of a Polyglycol

A foam sample was prepared using the same components and procedures as in Experiment 8 except that the amount of polyethylene glycol was quadrupled. Physical properties of the foam sample so prepared were: (a) Friability - 54 percent; (b) Foam density - 44.8 kg/m$^3$; (c) Foam cell size - 0.67 millimeter; and (d) Foam K-Factor - 0.017 watt/(m•K). The sample had a Burn-Through Time of greater than 30 minutes. In the Autoxidation Test, the sample exhibited no exotherm in a 250°C oven.

Experiment 11-14 -

Burn-Through Evaluation

Foams prepared in the same manner as those prepared in Experiments 7-10 above but with varying levels of phenol and polyglycol were evaluated for Burn-Through Time. The results of such evaluations are presented together with the Burn-Through Times for Experiments 6-10 above in the following table.

| Experiment No. | % Phenol* | % Polyglycol* | Burn-Through Time (Minutes) |
|---|---|---|---|
| 6** | 8.2 | 20 | 1.5 |
| 7 | 13.9 | 20 | 30+ |
| 8** | 18.8 | 5 | 1.0 |
| 9 | 18.8 | 10 | 21 |
| 10 | 18.8 | 20 | 30+ |
| 11** | 4.2 | 20 | 1.25 |
| 12** | 13.9 | 20 | 1.5 |
| 13 | 21.4 | 20 | 30+ |
| 14 | 23.4 | 20 | 30+ |

* Based on weight of resin.

** Comparative Experiment, not an example of the invention.

An examination of the data presented in the foregoing table illustrates that a total phenol content of 13.9 percent based on weight of resin represents a threshhold level at a 20 percent level of polyglycol also based on weight of resin. By total phenol content, it is to be understood that this quantity is the amount of solvent plus phenol remaining after stripping. The data further illustrates that foams having a Burn-Through Time of greater than 10 minutes are produced at a polyglycol level of about 10 percent at a total phenol content of 18.8 percent. Persons skilled in the art will recognize that optimal amounts of polyglycol and phenol may vary depending upon the phenol or the polyglycol used in making the foam but that such amounts are readily ascertainable.

An examination of the foregoing Experiments 1-14 amply illustrates the advantages of the present invention. Foams having a generally closed cell structure and a K-factor of less than 0.029, preferably in the range of from 0.017 to 0.024 watt/(m•K) are readily produced. In addition, by combining solvent and polyglycol, foams are produced which, in addition to having the aforementioned K-factor and cell structure, exhibit marked resistance to flame penetration and to autoxidation.

Similar results to the foregoing are produced with other solvents, polyglycols, surfactants and catalysts, all as detailed hereinabove.

## Claims

1. A process for preparing a generally closed cell, low K-factor foam material, the foam material resulting from a process wherein a phenol-aldehyde resole resin, a blowing agent and, optionally, a surfactant are admixed with an acid catalyst to form an admixture which is then poured into a forming means and cured, characterised in that
   (a) the resole resin is stripped to a water content of less than 7 weight percent, based on resin weight, after addition of a viscosity-modifying aromatic organic solvent in an amount sufficient to maintain a viscosity of less than 100 Pa•s; and
   (b) from 10 to 20 weight percent, based on resin weight, of an unbranched dihydroxy ether polyglycol having a molecular weight greater than 300 is added to the stripped resole resin.

2. a process as claimed in Claim 1, wherein the resole resin is stripped to a water content of from 3 to 6 percent by weight based on weight of resin.

3. a process as claimed in Claim 1 or Claim 2, wherein the solvent is selected from phenol, aniline,

resorcinol, cresol or aminophenol.

4. A process as claimed in Claim 3, wherein the solvent is phenol or aniline.

5. a process as claimed in any one of the preceding claims, wherein the amount of solvent added is from 8 to 20 weight percent based on weight of resin.

6. A process as claimed in any one of the preceding claims, wherein the polyglycol is selected from polyethylene glycols and polypropylene glycols.

7. A process as claimed in any one of the preceding claims, wherein the surfactant is an alkyl siloxane alkylene oxide block copolymer of the formula:

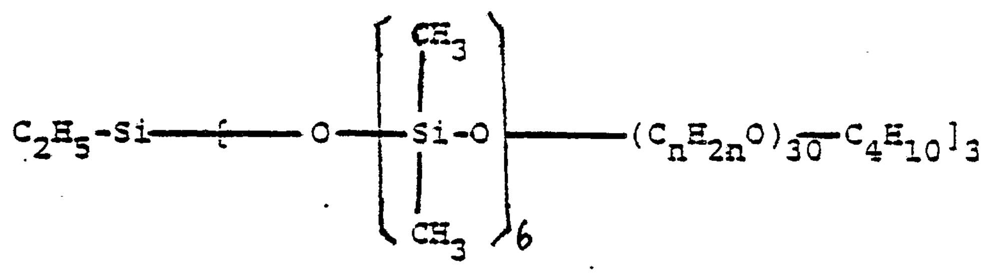

wherein $C_nH_{2n}O$ is a mixed oxyethylene/oxypropylene block of 17 oxyethylene units and 13 oxypropylene units, or an alkyl siloxane alkylene oxide copolymer of the formula:

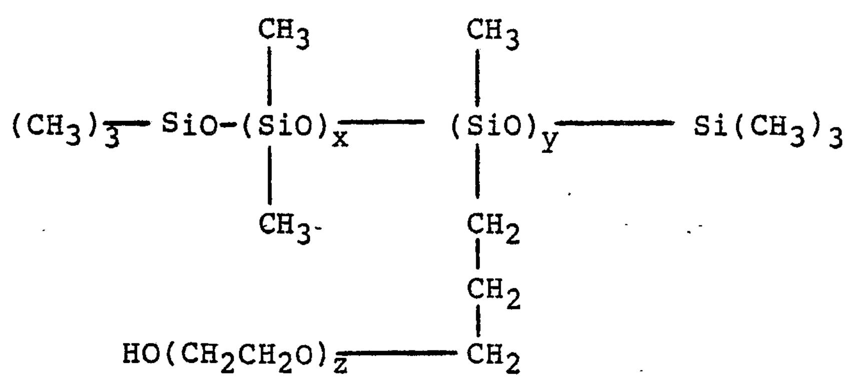

wherein x is an integer equal to 15 or 16, y is an integer equal to 2 or 3 and z is an integer equal to 10 or 11; or an ethoxylated castor oil.

8. a process as claimed in any one of the preceding claims, wherein the blowing agent it trichlorotrifluoroethane.

9. The use of a process as claimed in any one of the preceding claims to produce a foam material having a K-factor which is less than 0.029 watt/(m•K) at 24° Centrigrade.

10. The use of a process as claimed in any one of Claims 1 to 8 to produce a foam material having an average cell size diameter of from 0.1 to 0.5 millimeters as measured in accordance with American Society for Testing Materials (ASTM) D-2842.

11. A process as claimed in any one of the preceding claims, wherein the amount of polyglycol is greater than 15 weight percent and the total amount of any residual phenol in the resole resin plus solvent in the foamable mixture is greater than 14 weight percent, both based on weight of resin.

**12.** A process as claimed in any one of the preceding claims, wherein sufficient solvent is added before stripping the resin so that the viscosity of the stripped resin is less than 3.5 Pa•s (3,500 cps).

## Revendications

**1.** Procédé de préparation d'un matériau mousse à alvéoles généralement closes et à faible facteur K, le matériau mousse provenant d'un procédé dans lequel on mélange une résine résol phénol-aldéhyde, un agent d'expansion et, facultativement, un agent tensio-actif avec un catalyseur acide pour former un mélange qu'on verse ensuite dans un moyen de formage et qu'on fait durcir,
caractérisé en ce que :
(a) on amène, par élimination d'eau, la résine résol à une teneur en eau inférieure à 7% en poids par rapport au poids de la résine, après l'addition d'un solvant organique aromatique modifiant la viscosité, en une quantité suffisante pour maintenir une viscosité inférieure à 100 Pa•s, et (b) on ajoute à la résine résol appauvrie en eau de 10 à 20% en poids, par rapport au poids de la résine, d'un polyglycol éther dihydroxylé non ramifié, ayant une masse moléculaire supérieure à 300.

**2.** Procédé selon la revendication 1, dans lequel on amène, par élimination d'eau, la résine résol à une teneur en eau de 3 à 6% en poids par rapport au poids de la résine.

**3.** Procédé selon la revendication 1 ou 2, dans lequel on choisitle solvant parmi le phénol, l'aniline, le résorcinol, le crésol et l'aminophénol.

**4.** Procédé selon la revendication 3, dans lequel le solvant est le phénol ou l'aniline.

**5.** Procédé selon l'une quelconque des revendications précédentes, dans lequel la proportion de solvant ajoutée est comprise entre 8 et 20% en poids par rapport au poids de la résine.

**6.** Procédé selon l'une quelconque des revendications précédentes, dans lequel on choisit le polyglycol parmi les polyéthylèneglycols et les polypropylèneglycols.

**7.** Procédé selon l'une quelconque des revendications précédentes, dans lequel l'agent tensio-actif est un copolymère séquencé d'alkylsiloxane et d'oxyde d'alkylène, répondant à la formule :

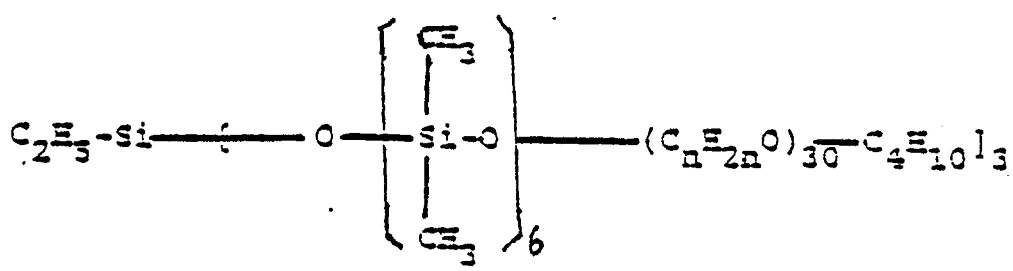

dans laquelle $C_nH_{2n}O$ est une séquence mixte oxyéthylène/oxypropylène comportant 17 motifs oxyéthylène et 13 motifsoxypropylène, ou un copolymère alkylsiloxane/oxyde d'alkylène de formule :

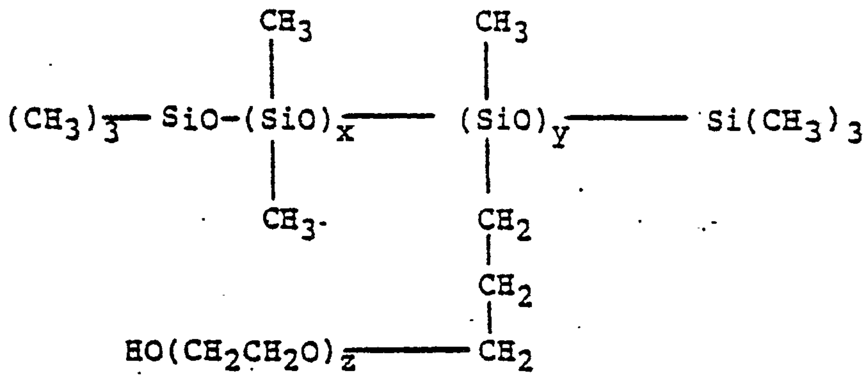

dans laquelle x est un nombre entier égal à 15 ou 16, y est nombre entier égal à 2 ou 3 et z est un nombre entier égal à 10 ou 11, ou une huile de ricin éthoxylée.

8. Procédé selon l'une quelconque des revendications précédentes, dans lequel l'agent d'expansion est le trichlorotrifluoroéthane.

9. Utilisation d'un procédé selon l'une quelconque des revendications précédentes pour produire un matériau mousse ayant un facteur K inférieur à 0,029 watt/(m•K) à 24° C.

10. Utilisation d'un procédé selon l'une quelconque des revendications 1 à 8, pour produire un matériau mousse ayant un diamètre moyen d'alvéole de 0,1 à 0,5 mm, mesuré selon ASTM D-2842.

11. Procédé selon l'une quelconque des revendications précédentes , dans lequel la proportion de polyglycol est supérieure à 15% en poids et la proportion totale de tout phénol résiduel présent dans la résine résol et du solvant dans le mélange transformable en mousse est supérieure à 14% en poids, les deux pourcentages étant rapportés au poids de la résine.

12. Procédé selon l'une quelconque des revendications précédentes, dans lequel on ajoute suffisamment de solvant, avant l'élimination d'eau de la résine, pour que la viscosité de la résine appauvrie en eau soit inférieure à 3,5 Pa•s (3500 cp).

## Ansprüche

1. Verfahren zum Herstellen eines geschlossenzelligen Schaumproduktes mit niedrigem K-Faktor, wobei das Schaumprodukt aus einem Verfahren stammt, bei dem ein Phenol-Aldehyd-Resolharz, ein Treibmittel und gegebenenfalls ein Netzmittel mit einem sauren Katalysator unter Bildung einer Mischung gemischt werden, die dann in Formen geggossen und gehärtet wird,
**dadurch gekennzeichnet, daß**
(a) das Resolharz durch Abdestillieren bis zu einem Wassergehalt von weniger als 7 Gew.-%, bezogen auf Gewicht des Harzes, gebracht wird nach Zugabe eines die Viskosität verändernden aromatischen organischen Lösemittels in einer ausreichenden Menge, um eine Viskosität von kleiner 100 Pa•s aufrecht zu erhalten, und
(b) dem behandelten Resolharz von 10 bis 20 Gew.-%, bezogen auf Gewicht des Harzes, ein nicht verzweigtes Dihydroxyetherpolyglycol mit einem Molekulargewicht von größer 300 zugesetzt wird.

2. Verfahren nach Anspruch 1,
**dadurch gekennzeichnet,**
daß das Resolharz auf einen Wassergehalt von 3 bis 6 Gew.-%, bezogen auf Gewicht des Harzes, gebracht wird.

3. Verfahren nach Anspruch 1 oder 2,

**dadurch gekennzeichnet,**
daß das Lösemittel ausgewählt ist aus Phenol, Anilin, Resorzin, Cresol oder Aminophenol.

**4.** Verfahren nach Anspruch 3,
**dadurch gekennzeichnet,**
daß das Lösemittel Phenol oder Anilin ist.

**5.** Verfahren nach jedem der vorstehenden Ansprüche,
**dadurch gekennzeichnet,**
daß die zugesetzte Menge Lösemittel von 8 bis 20 Gew.-%, bezogen auf Gewicht des Harzes, beträgt.

**6.** Verfahren nach jedem der vorstehenden Ansprüche,
**dadurch gekennzeichnet,**
daß das Polyglycol ausgewählt ist aus Polyethylenglycolen und Polypropylenglycolen.

**7.** Verfahren nach jedem der vorstehenden Ansprüche,
**dadurch gekennzeichnet,**
daß das Netzmittel ein Alkylsiloxan-Alkylenoxidblockcopolymer der Formel ist:

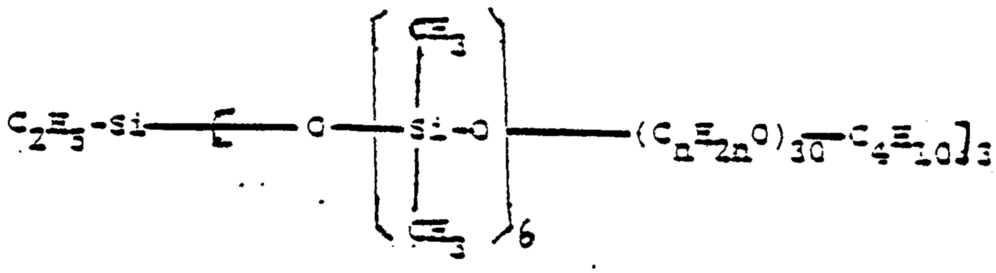

in der $C_nH_{2n}O$ ein gemischter Oxyethylen-/Oxypropylenblock mit 17 Oxyethyleneinheiten und 13 Oxypropyleneinheiten ist oder ein Alkylsiloxan-Alkylenoxidcopolymer der Formel ist:

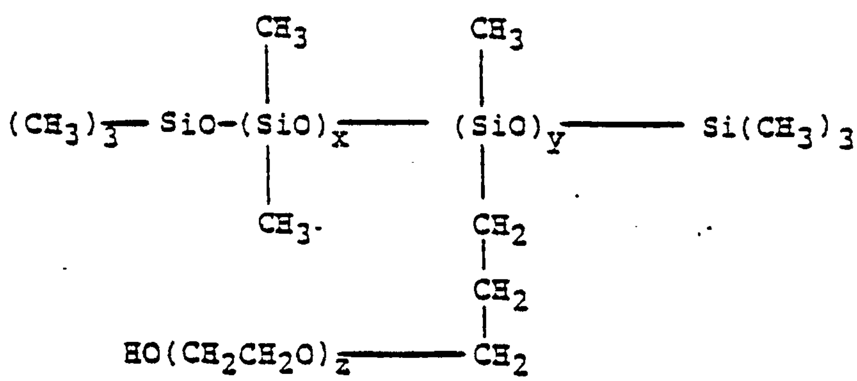

in der x eine ganze Zahl gleich 15 oder 16 ist, y ist eine ganze Zahl gleich 2 oder 3 und z ist eine ganze Zahl gleich 10 oder 11 oder ein ethoxyliertes Rizinusöl.

**8.** Verfahren nach jedem der vorstehenden Ansprüche,
**dadurch gekennzeichnet,**
daß das Treibmittel Trichlortrifluorethan ist.

**9.** Verwendung des Verfahrens nach jedem der vorstehenden Ansprüche zum Herstellen eines Schaumproduktes mit einem K-Faktor kleiner als 0,029 Watt/(m•K) bei 24° C.

**10.** Verwendung des Verfahrens nach jedem der vorstehenden Ansprüche 1 bis 8 zum Herstellen eines

Schaumproduktes mit einem mittleren Zellendurchmesser von 0,1 bis 0,5 Millimeter, gemessen nach American Society for Testing Materials (ASTM) D-2842.

**11.** Verfahren nach jedem der vorstehenden Ansprüche,
**dadurch gekennzeichnet,**
daß die Menge von Polyglycol größer als 15 Gew.-% ist und die gesamte Menge allen verbleibenden Phenols im Resolharz plus Lösemittel in der aufschäumbaren Mischung größer als 14 Gew.-% ist, beides basierend auf dem Gewicht des Harzes.

**12.** Verfahren nach jedem der vorstehenden Ansprüche,
**dadurch gekennzeichnet,**
daß ausreichend Lösemittel zugesetzt ist, ehe aus dem Harz abdestilliert wird, so daß die Viskosität des Harzes nach dem Abdestillieren kleiner als 3,5 Pa•s (3.500 cps) ist.